**Europäisches Patentamt**

**European Patent Office**

**Office européen des brevets**

(19)

(11) Veröffentlichungsnummer: **0 259 768**
**A2**

(12) ## EUROPÄISCHE PATENTANMELDUNG

(21) Anmeldenummer: **87112789.0**

(22) Anmeldetag: **02.09.87**

(51) Int. Cl.4: **C08K 5/10 , C08L 27/06**

(30) Priorität: **10.09.86 DE 3630778**

(43) Veröffentlichungstag der Anmeldung:
**16.03.88 Patentblatt 88/11**

(84) Benannte Vertragsstaaten:
**AT BE CH DE ES FR GB GR IT LI LU NL SE**

(71) Anmelder: **NEYNABER CHEMIE GmbH**
**Am Wedenberg Posfach 11 20**
**D-2854 Loxstedt(DE)**

(72) Erfinder: **Worschech, Kurt, Dr.**
**Alte Strasse 4**
**D-2854 Loxstedt(DE)**
Erfinder: **Wedl, Peter**
**Löningstrasse 13**
**D-2850 Bremerhaven-M.(DE)**
Erfinder: **Kachel, Helmut, Dr.**
**Hartwigstrasse 1**
**D-2850 Bremerhaven(DE)**
Erfinder: **Schult, Günter**
**Hohewurth 58 a**
**D-2854 Loxstedt(DE)**

(54) **Gleitmittelsystem für die Verarbeitung von Hart-PVC.**

(57) Gleitmittelgemische für Emulsions-PVC mit hohem K-Wert enthalten

A) 1) Mischester aus

a) aliphatischen, cycloaliphatischen und/oder aromatischen Dicarbonsäuren mit 2 bis 22 Kohlenstoffatomen,

b) aliphatischen Polyolen mit 2 bis 6 Hydroxylgruppen und

c) aliphatischen Monocarbonsäuren mit 12 bis 30 Kohlenstoffatomen

mit Hydroxyl-bzw. Säurezahlen von 0 bis 6 und/oder

2) Fettsäurefettalkoholester mit insgesamt 36 bis 44 Kohlenstoffatomen,

B) 1) Mischestern aus

a) aliphatischen, cycloaliphatischen und/oder aromatischen Dicarbonsäuren mit 2 bis 22 Kohlenstoffatomen,

b) aliphatischen Polyolen mit 2 bis 6 Hydroxylgruppen und

c) aliphatischen Monocarbonsäuren mit 12 bis 30 Kohlenstoffatomen,

die im Mittel pro Molekül Mischester wenigstens eine freie Hydroxylgruppe enthalten, und/oder

2) Ester aus

a) aliphatischen, cycloaliphatischen und/oder aromatischen Polycarbonsäuren oder Hydroxypolycarbonsäuren und

b) aliphatischen Monoalkoholen mit 12 bis 24 Kohlenstoffatomen,

die im Mittel pro Molekül Ester mindestens eine freie Carboxylgruppe und/oder eine freie Hydroxylgruppe enthalten, und gegebenenfalls

C) Metallseifen mit Gleitmittel-und/oder Stabilisatorwirkung für PVC

## "Gleitmittelsystem für die Verarbeitung von Hart-PVC"

Bei der Herstellung von weichmacherfreien Folien aus Emulsions-PVC mit hohem K-Wert, beispielsweise von Klebebandfolien, werden relativ große Mengen an Gleitmitteln eingesetzt. Üblich sind Gleitmittelzusätze in Mengen von 4 phr (d.h. von 4 Gewichtsteilen Gleitmittel auf 100 Gewichtsteile Kunstharz) und mehr. Als Stabilisatoren dienen in der Regel Diphenylthioharnstoff oder Alkylzinnthioglykolate.

Entscheidend für die Auswahl der Gleitmittel ist nicht nur deren Schmierwirkung und der durch sie bewirkte Trenneffekt, bedeutungsvoll ist vor allem ihre Verträglichkeit mie dem Substrat. Nur wenige Gleitmittel sind in einer Dosierung von 4 bis 5 oder auch 6 phr mit Hart-PVC verträglich. Dazu kommt, daß die hier verwendeten Gleitmittel auch mit dem bei der Polymerisation verwendeten und im Polymiersat noch vorhandenen Emulgator ebenfalls verträglich sein müssen.

Die Anforderungen, die sich aus dem Herstellungsverfahren und den gewünschten Produkteigenschaften ableiten, werden bis heute noch am besten von Gleitmitteln auf Basis von Montansäurederivaten wie Montansäureestern und teilverseiften Montanwachsen erfüllt. Die Verfügbarkeit der Montanwachse und der davon sich ableitenden Derivate ist jedoch begrenzt und gewissen Schwankungen unterworfen. Schon aus diesem Grunde besteht ein Bedürfnis nach Produkten, die gegebenenfalls die Montansäurederivate ersetzen können. Darüberhinaus hat die Verwendung der Gleitmittel auf Basis von Montansäurederivaten den Nachteil, daß die Rezepturen der Kunststoff-Formmassen bezüglich der Gleitmittelkomponente vollständig festgelegt sind, so daß keine Möglichkeit besteht, auf das Schmierverhalten der Formmassen oder auf die Farbe, die Transparenz und die Benetzbarkeit der Folie Einfluß zu nehmen. So ist es beispielsweise nicht möglich, bei Hart-PVC-folien, die Montansäurederivate als Gleitmittel enthalten, die Benetzbarkeit mit wäßrigen Lösungen so weit zu steigern, daß die heute gewünschte Anwendung von wäßrigen Primern anstelle der früher eingesetzten Primer auf Lösungsmittelbasis möglich wird.

Die bekannten Gleitmittel auf von Montansäurederivaten lassen sich nicht in einfacher Weise durch strukturanaloge Wachsester, d.h. Fettsäurealkoholester, ersetzen. So sind mittelkettige Wachsester bei Dosierungen von 1 bis 2 phr mit Hart-PVC noch recht gut verträglich; bei einer Verdoppelung der Einsatzmenge werden sie jedoch völlig unverträglich, so daß ein Folienansatz mit 4 phr Cetylpalmitat vollkommen überschmiert ist.

Der Erfindung lag somit einmal die Aufgabe zugrunde, ein neues Gleitmittelsystem für die Verarbeitung von Hart-PVC aufzufinden, das von einer breiteren Rohstoffbasis aus zugänglich ist als die zu ersetzenden Montansäurederivate. Diese neuen Gleitmittelsysteme sollten zumindest zu ebenso guten Ergebnissen führen wie die bekannten Produkte. Darüberhinaus sollte mit dem neuen Gleitmittelsystem die Möglichkeit geschaffen werden, stärkeren Einfluß auf wichtige Eigenschaften der zu verformenden Kunststoffmassen und der Fertigprodukte zu nehmen. Dabei sollte sowohl Einfluß auf das rheologische Verhalten der PVC-Formmassen als auch auf die Auswirkungen des Gleitmittelzusatzes im Endprodukt genommen werden können. Die Lösung der Aufgabe besteht in einem System aus mehreren Einzelkomponenten abgestufter Wirksamkeit. Durch die Wahl eines Mehrkomponentengemisches wird es möglich, die einzelnen Komponenten in vergleichsweise geringeren Mengen einzusetzen, so daß die Gefahr einer Übersättigung des Substrates mit bestimmten Komponenten nicht mehr besteht oder zumindest stark abgeschwächt wird.

Gegenstand der Erfindung ist dementsprechend ein Gleitmittelgemisch für Emulsions-PVC mit hohem K-Wert enthaltend

A) 1) Mischester aus

a) aliphatischen, cycloaliphatischen und/oder aromatischen Dicarbonsäuren mit 2 bis 22 Kohlenstoffatomen,

b) aliphatischen Polyolen mit 2 bis 6 Hydroxylgruppen und

c) aliphatischen Monocarbonsäuren mit 12 bis 30 Kohlenstoffatomen

mit Hydroxyl-bzw. Säurezahlen von 0 bis 6 und/oder

2) Fettsäurefettalkoholester mit insgesamt 36 bis 44 Kohlenstoffatomen,

B) 1) Mischestern aus

a) aliphatischen, cycloaliphatischen und/oder aromatischen Dicarbonsäuren mit 2 bis 22 Kohlenstoffatomen,

b) aliphatischen Polyolen mit 2 bis 6 Hydroxylgruppen und

c) aliphatischen Monocarbonsäuren mit 12 bis 30 Kohlenstoffatomen,

die im Mittel pro Molekül Mischester wenigstens eine freie Hydroxylgruppe enthalten, und/oder

2) Ester aus

a) aliphatischen, cycloaliphatischen und/oder aromatischen Polycarbonsäuren oder Hydroxypolycarbonsäuren und

b) aliphatischen Monoalkoholen mit 12 bis 24 Kohlenstoffatomen,

die im Mittel pro Molekül Ester mindestens eine freie Carboxylgruppe und/oder eine freie Hydroxylgruppe enthalten, und gegebenenfalls

C) Metallseifen mit Gleitmittel-und/oder Stabilisatorwirkung für PVC.

Die Lösung der erfindungsgemäßen Aufgabenstellung besteht demnach in einem Mehrkomponentengemisch, das sich durch die wesentlichen Komponenten A 1) und/oder A 2) und B 1) und/oder B 2) und C ) auszeichnet.

Die Mischester gemäß A 1) sind aus Dicarbonsäuren, Polyolen und langkettigen Carbonsäuren aufgebaut. Bei der Herstellung dieser Mischester wird das Verhältnis von Hydroxylgruppen und Carboxylgruppen in den Ausgangsmaterialien und das Ausmaß der Veresterung so gewählt, daß ein praktisch hydroxylgruppen-und carboxylgruppenfreies Endprodukt resultiert. Bei den Fettsäurefettalkoholestern gemäß A 2) handelt es sich ebenfalls um Verbindungen, in denen praktisch keine freien Hydroxyl-oder Carboxylgruppen vorhanden sind. Die unter A 1) und A 2) definierten Ester sind in Emulsions-PVC selbst in vergleichsweise hohen Konzentrationen löslich bzw. verträglich; ihre Verträglichkeit mit dem bei der Polymerisation eingesetzten und in den Polymerisaten noch vorhandenen Emulgatoren ist jedoch begrenzt. Darüberhinaus bewirken die Ester gemäß A 1) und A 2) bei ihrer Einarbeitung in hohen Dosierungen einen gewissen hydrophobierenden Effekt.

Erfindungsgemäß werden die Einschränkungen, denen die Verbindungen gemäß A 1) und A 2) unterliegen, dadurch beseitigt oder wenigstens weitgehend vermieden, daß die unter B 1) und B 2) definiereten Partialester in die Gleitmittelgemische eingearbeitet werden. Im Gegensatz zu den neutralen Estern nach A 1) und A 2) enthalten die Ester gemäß B 1) und B 2) zusätzliche polare Gruppen in Form von freien Hydroxyl-und/oder Carboxylgruppen. Bei der Herstellung dieser Ester werden die Molverhältnisse der Ausgangsverbindungen und die Veresterungsbedingungen so gewählt, daß in den resultierenden Endprodukten im statistischen Mittel pro Partialestermolekül wenigstens eine freie Hydroxyl-und/oder Carboxylgruppe vorliegt.

Die Esterkombination aus A 1) und/oder A 2) und B 1) und/oder B 2) wird gegebenenfalls ergänzt durch die zusätzliche Einführung einer hochverträglichen Metallseife gemäß C), die einer Überschmierung entgegenwirkt und die insbesondere auch geeignet sein soll, die Hydrophilie des gesamten Gleitmittelsystems zu erhöhen.

Die neutralen Mischester gemäß A 1) sind bekannte Verbindungen, die nach gängigen Methoden der organischen Synthese erhalten werden können. Ihre Verwendung als Gleitmittelzusatz bzw. als Gleitmittelkomponente in thermoplastischen Kunststoffen, insbesondere in Polyvinylhalogeniden ist beispielsweise aus der DE-PS 19 07 768 und der DE-PS 22 62 266 bekannt. Bevorzugt sind hier Mischester, in denen das Molverhältnis Dicarbonsäure : Polyol : und Monocarbonsäure etwa

$$n - 1 : n : nm - 2(n-1)$$

beträgt, wobei n eine ganze Zahl von 2 bis 11 ist und m die Anzahl der Hydroxylgruppen des Polyols bedeutet, so daß m Zahlenwerte von 2 bis 6 annehmen kann. Durch den Wert von n wird das mittlere Molekulargewicht der Mischester weitgehend festgelegt. Je höher die Werte von n gewählt werden, umso höher liegen auch die mittleren Molekulargewichte der erhaltenen Produkte. Im Zusammenhang mit der Erfindung liegen die bevorzugten Werte für n im Bereich von 1 bis 8, insbesondere im Bereich von 1 bis 4.

Die Herstellung der neutralen Mischester gemäß A 1) erfolgt nach an sich bekannten Veresterungsverfahren, in dem man beispielsweise eine Monocarbonsäure c) mit einem Polyol b) so verestert, daß der erhaltene Teilester noch eine oder mehrere freie Hydroxylgruppen enthält, die man dann mit einer Dicarbonsäure a) umsetzt. Man kann aber auch zunächst einen Teil der Hydroxylgruppen eines Polyols b) mit einer Dicarbonsäure a) verestern und danach die restlichen freien Hydroxylgruppen des erhaltenen Teilesters mit einer Monocarbonsäure c) zur Reaktion bringen. Werden dabei die oben angegebenen Molverhältnisse eingehalten, und die Reaktionsbedingungen so gewählt, daß eine vollständige Veresterung eintritt, dann enthalten die resultierenden Mischester praktisch keine freien Carboxyl-und Hydroxylgruppen, das heißt, sie besitzen Hydroxyl-und Säurezahlen im Bereich von 0 bis 6.

Als Dicarbonsäurekomponente für die Herstellung der Mischester gemäß A 1) sind beispielsweise folgende Verbindungen geeignet: Oxal-, Malon-, Bernstein-, Glutar-, Adipin-, Pimelin-, Kork-, Azelain-, Sebazin-, Nonandicarbon-, Undecandicarbon-, Eikosandicarbon-, Malein-, Fumar-, Citracon-, Mesacon-, Itakon-, Cyclopropandicarbon-, Cyclobutandicarbon-, Cyclopentandicarbon-, Campher-, Hexahydrophthal-, Phthal-, Terephthal-, Isophthal-, Naphthal-und Diphenyl-o,o'-dicarbonsäure.

Als Polyolkomponente für die Herstellung der Mischester gemäß A 1) seien z.B. folgende Verbindungen genannt: Ethylenglykol, 1,2-Propylenglykol, 1,3-Propylenglykol, 1,4-Butandiol, 2,3-Butandiol, 1,5-Pentandiol, 1,6-Hexandiol, Glycerin, Trimethylolpropan, Erythrit, Pentaerythrit, Dipentaerythrit, Xylit, Mannit und Sorbit.

Als Monocarbonsäurekomponente für die Herstellung der Mischester gemäß A 1) eignen sich beispielsweise folgende Verbindungen: Laurin-, Myristin-, Palmitin-, Margarin-, Stearin-, Arachidin-, Behen-, Lignocerin-, Cerotinsäure, Montansäure, Öl-, Elaidin-, Eruka-, Linol-und Linolinsäure, ferner Gemische dieser Säuren, insbesondere solche, wie sie aus natürlichen Fetten und Ölen gewonnen werden können.

Besonders geeignet als Komponente A 1) sind Mischester auf Basis von Adipinsäure, Pentaerythrit und besonders langkettigen aliphatischen Monocarbonsäuren, beispielsweise solchen, mit 20 bis 24 Kohlenstoffatomen. Niedermolekulare Mischester dieser Art, die auf ein Mol Adipinsäure 2 Mol Polyol und die für die vollständige Veresterung der Hydroxylgruppen noch erforderliche Mengen Monocarbonsäure enthalten, sind besonders geeignet. So ist eine bevorzugte Basiskomponente gemäß A 1) ein Mischester aus einem Mol Adipinsäure, 2 Mol Pentaerythrit und 6 Mol Behensäure. Weiterführende allgemeine Angaben finden sich in der DE-PS 22 62 266, Spalten 5 und 6, die hier zum Gegenstand der vorliegenden Offenbarung gemacht werden.

Die Fettsäurefettalkoholester gemäß A 2) stellen ebenfalls eine bekannte Substanzklasse dar. Sie können durch Veresterung von Fettsäuren mit 14 bis 22 Kohlenstoffatomen mit Fettalkoholen mit 14 bis 22 Kohlenstoffatomen erhalten werden, wobei jeweils die gesättigten Verbindungen bevorzugt sind. Beispiele für geeignete Ausgangsfettsäuren sind Myristin-, Palmitin-, Stearin-und Behensäuren. Beispiele für geeignete Ausgangsfettalkohole sind Myristyl-, Palmityl-, Stearyl-und Behenylalkohol. Die genannten Fettsäure und Fettalkohole können als chemische Individien und als Verbindungsgemische für die Synthese dieser Ester eingesetzt werden. Im Sinn einer feineren Abstufung der Eigenschaften der Gleitmittelgemische kann es von Vorteil sein, wenn Fettsäurefettalkoholester einer definierten Kettenlänge eingesetzt werden, beispielsweise Stearylstearat oder Behenylbehenat.

Die Mischester gemäß B 1) sind aus denselben Komponenten aufgebaut wie die Mischester gemäß A 1), wobei die vorstehenden, im Zusammenhang mit der Komponente A 1) gemachten Angaben zu den Ausgangsmaterialien a) Dicarbonsäuren, b) Polyolen und c) Monocarbonsäuren hier sinngemäß gelten. Die Mischester gemäß B 1) unterscheiden sich von der Mischesterkomponente gemäß A 1) jedoch dadurch, daß im statistischen Mittel pro Mischester Molekül wenigstens eine freie Hydroxylgruppe vorhanden ist. Das Molverhältnis der Komponenten a) Dicarbonsäure und b) Polyol a : b beträgt etwa n - 1 : n, wobei eine ganze Zahl von 2 bis 12 ist. Die Molzahl der Komponente c) Monocarbonsäure wird so gewählt, daß im Mischestermolekül im allgemeinen nicht mehr als 6, insbesondere nicht mehr als 4 freie Hydroxylgruppen vorhanden sind. Bevorzugt werden Partialmischester, die im statistischen Mittel pro Molekül 1 bis 3 freie Hydroxylgruppen enthalten.

Die Mischester mit freien Hydroxylgruppen gemäß B 1) können dadurch erhalten werden, daß man die Molverhältnisse der Komponenten a), b) und c) so auswählt, daß bei der Veresterung im statistischen Mittel die gewünschte Anzahl von freien funktionellen Gruppen unverestert bleibt.

Besonders geeignete Mischester gemäß B 1) mit freien Hydroxylgruppen leiten sich von Polyolen mit 3 oder 4 Hydroxylgruppen ab, insbesondere von Glycerin und Pentaerythrit. Ester dieser Polyole mit aliphatischen Dicarbonsäuren mit 4 bis 10 Kohlenstoffatomen und aliphatischen Monocarbonsäuren mit 14 bis 20 Kohlenstoffatomen, insbesondere mit 16 bis 18 Kohlenstoffatomen und im statistischen Mittel 1 bis 4 Hydroxylgruppen pro Mischestermolekül werden dabei bevorzugt.

Die Ester gemäß B 2) leiten sich von aliphatischen, cycloaliphatischen und aromatischen Polycarbonsäuren mit wenigstens 3 Carboxylgruppen und von aliphatischen cycloaliphatischen und aromatischen Hydroxylpolycarbonsäuren mit wenigstens 2 Carboxylgruppen und wenigstens einer Hyroxylgruppe ab. Beispiele für geeignete Säuren dieser Kategorie sind Aconit-, Cyclobutantetracarbon-, Trimellit-, Trimesin-, Hexahydromellit-, Mellit-, Tartron-, Äpfel-, Wein-, Citronen-und Hydroxytrimesinsäure. Als Alkoholkomponente für die Ester gemäß B 2) eignen sich beispielsweise Lauryl-, Myristyl-, Palmityl-, Stearyl-, Arachidyl-, Behenyl-, Lignoceryl, Oleyl-und Erucylalkohol, ferner Gemische aus Alkoholen mit 12 bis 24 Kohlenstoffatomen, wie sie nach den bekannten Verfahren der Fettalkoholherstellung aus natürlichen Fetten und Ölen gewonnen werden können.

Die Herstellung der Ester mit freien Carboxyl-und/oder Hydroxylgruppen gemäß B 2) kann durch Reaktion der Komponenten in den vorgesehenen Molverhältnissen unter den Bedingungen der bekannten Veresterungsverfahren erfolgen.

Eine bevorzugte Basiskomponente gemäß B 2) mit freien Carboxylgruppen ist Distearyltrimellitat, ein Partialester, der durch Reaktion von 1 Mol Trimellitsäure mit 2 Mol Stearylalkohl erhalten werden kann. Eine bevorzugte Basiskomponente gemäß B 2) mit freien Carboxyl-und freien Hydroxylgruppen ist Distearylcitrat, erhalten durch Veresterung von Citronensäure mit Stearylalkohol im Molverhältnis 1 : 2.

Als Metallseifen mit Gleitmittel-und/oder Stabilisatorwirkung gemäß C) eignen sich insbesondere in PVC hochverträgliche Metallseifen, die einer Überschmierung entgegenwirken und die Hydrophilie des gesamten Gleitmittelsystems zusätzlich verbessern. Geeignet sind insbesondere Salze organischer Säuren mit Metallen der zweiten Haupt- und/oder Nebengruppe des Periodensystems. Erdalkalimetallseifen, insbesondere Barium-und vor allem Calciumseifen, kommt eine besondere Bedeutung zu. Geeignet sind der beispielsweise auch entsprechende Zink-und/oder Cadmiumseifen.

Bevozugt werden als Komponente C) solche Metallseifen, die selbst klare Schmelzen bilden und sich insbesondere in den Schmelzen der Ester gemäß A 1), A 2), B 1) und/oder B 2) klar lösen. Metallseifen, die diesen Bedingungen entsprechen, neigen weit weniger zum Eintrüben der fertigen Folien als beispielsweise andere an sich übliche Metallseifen, wie Calciumstearat. Als Komponente C) sind hier insbesondere Salze von acylierten Hydroxycarbonsäuren geeignet, die im Säurerest insgesamt wenigstens 10, vorzugsweise 15 Kohlenstoffatome aufweisen.

Dabei kann die Hydroxycarbonsäure eine niedere Hydroxycarbonsäure mit beispielsweise 2 bis 5 Kohlenstoffatomen sein, beispielsweise Milchsäure. Die bevorzugte Mindestzahl von Kohlenstoffatomen wird dann über die zur Acylierung der Hydroxylgruppe eingesetzten Carbonsäure eingeführt, wobei hier acylierende Carbonsäurereste mit 10 bis 30 Kohlenstoffatomen, insbesondere mit 14 bis 24 Kohlenstoffatomen bevorzugt sind. Für diese acylierenden Carbonsäurereste gelten sinngemäß die vorstehenden, im Zusammenhang mit der Komponente A 1) gemachten Angaben zu den Monocarbonsäuren gemäß A 1 c). Besonders geeignet können in der freien Hydroxylgruppe acylierte Hydroxycarbonsäureoligomere mit einem Oligomerisierungsgrad von 2 bis 10, insbesondere 2 bis 4 sein, wobei hier gleiche oder unterschiedliche Hydroxycarbonsäuren vorliegen können. Eine besonders geeignete Klasse von Verbindungen zu C) sind Calciumsalze von acylierten Milchsäureestolieden.

In dem erfindungsgemäßen Gleitmittelgemisch sind in der Regel auf 1 Gewichtsteil der Komponenten A 1) und/oder A 2) 0,2 bis 4 Gewichtsteile der Komponenten B 1) und/oder B 2) und gegebenenfalls 0,2 bis 2 Gewichtsteile der Komponente C) vorhanden. Vorzugsweise sind in den Gemischen auf 1 Gewichtsteil der Komponenten A 1) und/oder A 2) 0,4 bis 0,6 Gewichtsteile der Komponenten B 1) und/oder B 2) und gegebenenfalls 0,4 bis 0,6 Gewichtsteile der Komponente C) vorhanden. Die Komponente A 2) wird nur in Ausnahmefällen zur Erzielung von besonderen Effekten als einzige Komponente der Kategorie A eingesetzt. Sofern die Komponenten A 1) und A 2) nebeneinander vorhanden sind, liegt das Gewichtsverhältnis von A 1) zu A 2) im Bereich von 1 : 0,1 bis 1 : 1. In den Fällen, in denen die Komponenten B 1) und B 2) nebeneinander vorliegen, liegt das Gewichtsverhältnis von B 1) und B 2) im Bereich von 9 : 1 bis 1 : 9.

Die erfindungsgemäße Gleitmittelkombination eignet sich für die Herstellung von Folien aus Emulsions-PVC hoher Härte, beispielsweise mit K-Werten von 70 bis 80, insbesondere für die Herstellung von weichmacherfreien Folien.

Die erfindungsgemäßen Gleitmittelgemische lassen sich problemlos auch in vergleichsweise hohen Mengen, insbesondere in Mengen von 4 bis 6 phr, in die PVC-Materialien der angegebenen Art einarbeiten. Die reologischen Anforderungen, die der Verformungsprozeß stellt, werden einwandfrei erfüllt. Die resultierenden Hart-PVC-Folien genügen allen von der Praxis gestellten Anforderungen, insbesondere auch hinsichtlich der guten Benetzbarkeit.

Besondere Vorteile des erfindungsgemäßen Gleitmittelsystems liegen darin, daß durch gezielte Modifikation und Auswahl der Komponente A 1), A 2), B 1), B 2) und/oder C) Einfluß auf bestimmte Parameter im Herstellungsprozeß und/oder in den Eigenschaften des Endproduktes genommen werden kann. So ist es beispielsweise möglich, durch Variation der Kettenlänge der Fettsäuren in den Komponenten A 1), A 2), B 1) und C) bzw. durch Variation der Kettenlänge der Fettalkohole in den Komponenten A 2) und B 2) gezielte Eigenschaftsvarianten zu erreichen. Wird eine höhere Verträglichkeit der Einzelkomponenten und/oder des Gemisches insgesamt gewünscht, so kann das über eine Verkürzung der Kettenlänge dieser Fettsäure-bzw. Fettalkoholreste erreicht werden. Wird stärkere Schmierung gefordert, so läßt sich diese durch Einführung längerkettiger Fettsäure-bzw. Fettalkoholreste ebenfalls erreichen. Durch geeignete Kombination von Fettsäure-und/oder Fetallkoholresten können hier Gleitmittelgemische mit optimaler Auswirkung auf die Eigenschaften der PVC-Folien hergestellt werden. Eine weitere Möglichkeit zur Einflußnahme liegt beispielsweise in der Veränderung des Molekulargewichtes der Mehrkomponentenester A 1) und B 1). Durch die Wahl von Mehrkomponentenestern mit höherem Molekulargewicht kann beispielsweise eine größere Trennwirkung erzielt werden.

## Beispiele

### Beispiel A: Herstellung von Distearyltrimellithat

192g (1 Mol) Trimellithsäureanhydrid, 520g (2 Mol) technischer Stearylalkohol und 1,4g Zinnschliff wurden unter Rühren und Anlegen eines leichten Vakuums auf 200°C erhitzt und 2 Stunden lang auf dieser Temperatur gehalten. Gegen Ende der Reaktion wurde der Druck auf 19 mbar vermindert. Die fast blanke, rötlich-gelbe Reaktionsmischung wurde mit 3,5g Bleicherde und 3,5g Aktivkohle versetzt und bei einer Temperatur von 80 bis 90°C der Druckfiltration unterworfen. Nach dem Abkühlen lag der Distearyltrimellithat als gelbliche wachsartige Masse vor (Tropfpunkt 52,0°C; Säurezahl 58,0; Verseifungszahl 236,7; Hydroxylzahl < 0,1).

### Beispiel B: Herstellung von Distearylcitrat

192g (1 Mol) Citronensäure und 520g (2 Mol) technischer Stearylalkohol wurden unter Rühren und Anlegen eines leichten Vakuums (0,5 bis 0,7 bar) auf 150°C erhitzt und 1 1/2 Stunden lang auf dieser Temperatur gehalten. Die blanke, hellgelbe Reaktionsmischung wurde mit 3,5g Bleicherde und 3,5g Aktivkohle versetzt und bei 80 bis 90°C der Druckfiltration unterworfen. Nach dem Abkühlen lag das Distearylcitrat als eine etwas spröde, wachsartige und leicht gelbstichige Masse vor (Tropfpunkt 45,8°C; Säurezahl 77,2; Verseifungszahl 249,7; Hydroxylzahl 60,8).

### Beispiel 1

Durch mechanisches Vermischen der Einzelbestandteile wurden die folgenden erfindungsgemäßen Gleitmittelgemische A' bis F' hergestellt (GT = Gewichtsteile; die hinter den Produktbezeichnungen angegebenen Verhältnisse bedeuten die Molverhältnisse der Ausgangsstoffe in der aus der Bezeichnung ersichtlichen Reihenfolge):

### Gemisch A'

50 GT Pentaerythrit-adipat-behenat (2 : 1 : 6)
25 GT Glycerin-adipat-stearat (2 : 1 : 2)
25 GT Ca-Stearoyl-lactoyl-lactat

### Gemisch B'

50 GT Pentaerythrit-adipat-behenat (2 : 1 : 6)
25 GT Glycerin-adipat-stearat (2 : 1 : 2)
25 GT Ca-Lauroyl-hydroxystearoyl-hydroxystearat

### Gemisch C'

50 GT Pentaerythrit-adipat-behenat (2 : 1 : 6)
25 GT Glycerin-adipat-stearat (2 : 1 : 2)
25 GT Zn-Stearoyl-lactoyl-lactat

### Gemisch D'

50 GT Pentaerythrit-adipat-behenat (2 : 1 : 6)
25 GT Glycerin-adipat-stearat (2 : 1 : 2)
25 GT Zn-Lauroyl-hydroxystearoyl-hydroxystearat

### Gemisch E'

50 GT Sorbit-adipat-behenat (3 : 2 : 14)
25 GT Glycerin-adipat-stearat (2 : 1 : 6)
25 GT Ca-Stearoyl-lactoyl-lactat

### Gemisch F'

50 GT Dipentaerythrit-adipat-behenat (3 : 2 : 14)
25 GT Glycerin-adipat-stearat (2 : 1 : 2)
25 GT Ca-Stearoyl-lactoyl-lactat

Jedes der oben beschriebenen Gleitmittelgemische wurde in Zusatzmengen von 2, 4 und 6 phr mit einem Grundansatz aus
100 GT Emulsions-PVC mit K-Wert 78 (Hostalit[R] E 2078)
0,5 GT Diphenylthioharnstoff
zu den Formmassen A 1 bis G 3 vermischt.

Das Plastizierverhalten der erhaltenen Formmassen wurde mit Hilfe eines Plastographen (Plasticorder PL 151; FA. Brabender; siehe P. Klenk, "Der Plastverarbeiter", 21. Jahrgang., 1970/7, Seiten 642-644) geprüft. Die Kammertemperatur betrug 180°C, die Drehzahl 50 Upm. Die Untersuchungen wurden jeweils an 33 g Substanz ausgeführt.

Als Vergleichssubstanzen wurden Montanwachs (Hoechst-Wachs[R] E) als Substanz Y' und Stearystearat als Substanz Z getestet.

Die gefundenen Ergebnisse sind in der nachstehenden Tabelle 1 wiedergegeben. Dort sind zu jeder Formmasse die Plastizierzeit, der maximale Knetwiderstand, der Knetwiderstand 15 Minuten nach dem Erreichen des Maximums und die Massetemperatur 15 Minuten nach dem Erreichen des Maximums angegeben. Für jedes Gleitmittel bzw. Gleitmittelgemisch ist in der 6. Spalte die Differenz zwischen den Werten für den Knetwiderstand 15 Minuten nach dem Erreichen des Knetwiderstandsmaximums bei 2 und 6 phr angegeben. In der letzten Spalte ist für jedes Gleitmittel die Differenz zwischen den Werten für die Massetemperatur 15 Minuten nach dem Erreichen des Knetwiderstandsmaximums bei 2 und 6 phr verzeichnet.

# T A B E L L E 1

## Plastizierverhalten der Formmassen A 1 bis F 3

| Form-masse | Zusatz (phr) | Plasti-zierzeit (min) | Knetwiderstand (Nm sec$^{-1}$) | | $\triangle$ (Nm sec$^{-1}$) für 2-6 phr | Massetempe-ratur ($^{\circ}$C) 15 min nach Maximum | $\triangle$ ($^{\circ}$C) für 2-6 phr |
|---|---|---|---|---|---|---|---|
| | | | Maximum | 15 min nach Maximum | | | |
| A 1 | 2 A' | 0 | 30,0 | 18,3 | | 185,0 | |
| A 2 | 4 A' | 0 | 22,0 | 15,2 | 6,8 | 179,5 | 11,2 |
| A 3 | 6 A' | 0,1 | 18,0 | 11,5 | | 173,8 | |
| B 1 | 2 B' | 0 | 24,0 | 17,2 | | 184,0 | |
| B 2 | 4 B' | 0 | 21,0 | 14,0 | 5,9 | 177,1 | 10,7 |
| B 3 | 6 B' | 0,3 | 16,2 | 11,3 | | 173,3 | |
| C 1 | 2 C' | 0 | 27,5 | 17,8 | | 184,0 | |
| C 2 | 4 C' | 0,2 | 22,0 | 14,8 | 6,2 | 178,5 | 10,0 |
| C 3 | 6 C' | 0,6 | 16,8 | 11,6 | | 174,2 | |
| D 1 | 2 D' | 0 | 26,0 | 18,0 | | 187,5 | |
| D 2 | 4 D' | 0 | 20,5 | 13,7 | 7,5 | 179,0 | 14,0 |
| D 3 | 6 D' | 0,2 | 16,7 | 10,5 | | 173,5 | |

0 259 768

T A B E L L E 1 (Fortsetzung)

Plastizierverhalten der Formmassen A 1 bis F 3

| Form-masse | Zusatz (phr) | Plasti-zierzeit (min) | Knetwiderstand (Nm sec$^{-1}$) | | $\triangle$(Nm sec$^{-1}$) für 2-6 phr | Massetempe-ratur (°C) 15 min nach Maximum | $\triangle$(°C) für 2-6 phr |
|---|---|---|---|---|---|---|---|
| | | | Maximum | 15 min nach Maximum | | | |
| E 1 | 2 E' | 0 | 23,0 | 15,2 | | 181,0 | |
| E 2 | 4 E' | 0,1 | 19,0 | 12,0 | 6,2 | 174,7 | 10,0 |
| E 3 | 6 E' | 0,2 | 15,0 | 9,0 | | 171,0 | |
| F 1 | 2 F' | 0 | 26,2 | 16,2 | | 181,0 | |
| F 2 | 4 F' | 0 | 20,0 | 12,6 | 7,4 | 174,8 | 11,0 |
| F 3 | 6 F' | 0,3 | 16,1 | 8,8 | | 170,0 | |
| Y 1 | 2 Y' | 0 | 23,3 | 16,5 | | 182,4 | |
| Y 2 | 4 Y' | 0,1 | 19,0 | 12,2 | 7,5 | 175,5 | 11,1 |
| Y 3 | 6 Y' | 0,2 | 15,7 | 9,0 | | 171,2 | |
| Z 1 | 2 Z' | | 21,5 | 17,9 | | 184,5 | |
| Z 2 | 4 Z' | | 16,0 | 12,8 | 10,8 | 176,0 | 14,7 |
| Z 3 | 6 Z' | | 8,0 | 7,1 | | 169,8 | |

Jedes der vorstehend beschriebenen Gleitmittelgemische wurde in Zusatzmengen von 2, 4 und 6 phr mit einem Grundansatz aus
100 GT Emulsions-PVC mit K-Wert 78 (Hostalit$^R$ E 2078)
0,5 GT Diphenylthioharnstoff
zu den Formmassen G 1 bis I 3 vermischt.

Das Plastizierverhalten der erhaltenen Formmassen wurde mit Hilfe des in Beispiel 1 beschriebenen Plastographen geprüft. Die Kammertemperatur betrug 165°C, die Drehzahl 30 Upm. Die Untersuchungen wurden jeweils an 33 g Substanz ausgeführt.

Zum Vergleich wurde Montanwachs (Hoechst-Wachs$^R$ E) als Substanz Y' in der Fommasse Y getestet.

Die gefundenen Ergebnisse sind in der nachstehenden Tabelle 2 wiedergegeben. Für die Tabelle 2 gelten die Erläuterungen zur Tabelle in Beispiel 1 sinngemäß.

## TABELLE 2

### Plastizierverhalten der Formmassen G 1 bis I 3

| Form-masse | Zusatz (phr) | Plasti-zierzeit (min) | Knetwiderstand (Nm sec$^{-1}$) Maximum | 15 min nach Maximum | $\triangle$(Nm sec$^{-1}$) für 2-6 phr | Massetempe-ratur ($^{\circ}$C) 15 min nach Maximum | $\triangle$ ($^{\circ}$C) für 2-6 phr |
|---|---|---|---|---|---|---|---|
| G 1 | 2 G′ | 0 | 25,2 | 19,9 | | 168,1 | |
| G 2 | 4 G′ | 0,8 | 20,0 | 16,8 | 7,1 | 162,3 | 10,1 |
| G 3 | 6 G′ | 1,1 | 16,4 | 12,8 | | 158,0 | |
| H 1 | 2 H′ | 0 | 30,0 | 19,8 | | 166,5 | |
| H 2 | 4 H′ | 0 | 22,2 | 16,2 | 8,0 | 160,8 | 9,7 |
| H 3 | 6 H′ | 0,1 | 19,0 | 11,8 | | 156,8 | |
| I 1 | 2 I′ | 0 | 28,8 | 19,4 | | 166,2 | |
| I 2 | 4 I′ | 0,6 | 20,5 | 15,8 | 7,9 | 159,8 | 10,4 |
| I 3 | 6 I′ | 0,2 | 16,8 | 11,5 | | 155,8 | |
| Y 1 | 2 Y′ | 0 | 25,0 | 19,0 | | 166,5 | |
| Y 2 | 4 Y′ | 0,6 | 18,8 | 15,0 | 8,2 | 161,0 | 9,8 |
| Y 3 | 6 Y′ | 0,8 | 15,0 | 10,8 | | 156,7 | |

0 259 768

Beispiel 3

Durch mechanisches Vermischen eines Grundansatzes aus
100 GT Emulsions-PVC mit K-Wert 78
(Hostalit $^R$ E 2078)
0,5 GT Diphenylthioharnstoff
mit 2, 4 und 6 phr des Gemisches A' aus Beispiel 1 bzw. 2, 4 und 6 phr Stearylstearat wurden die erfindungsgemäßen Formmassen K 1 bis K 3 und die Vergleichsformmassen Z 1 bis Z 3 hergestellt.

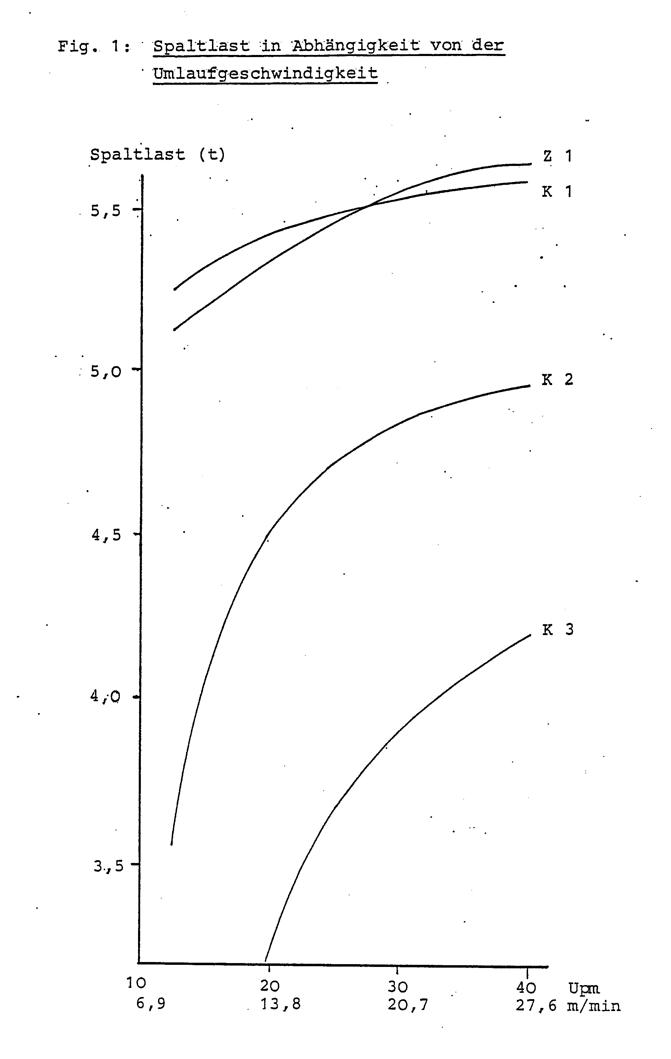

Jeweils 200g der auf diese Weise erhaltenen Formmassen wurden auf einem Laborwalzwerk der Abmessung 450 x 220 mm (Fa. Berstorff) bei einer Walzentemperatur von 180°C bearbeitet und die dabei auftretende Spaltlast (t) in Abhängigkeit von der Walzendrehzahl ($\frac{T}{min}$) bzw. der Umlaufgeschwindigkeit (m/min) gemessen. Die dabei für die Formmassen K 1, K 2, K 3 und Z 1 erhaltenen Ergebnisse sind in Fig. 1 graphisch dargestellt. Für die Formmassen Z 2 und Z 3 konnten keine Druckkurven aufgenommen werden, da hier wegen Überschmierung keine Fellbildung eintrat.

**Ansprüche**

1. Gleitmittelgemisch für Emulsions-PVC mit hohem K-Wert enthaltend
   A) 1) Mischester aus
a) aliphatischen, cycloaliphatischen und/oder aromatischen Dicarbonsäuren mit 2 bis 22 Kohlenstoffatomen,
b) aliphatischen Polyolen mit 2 bis 6 Hydroxylgruppen und
c) aliphatischen Monocarbonsäuren mit 12 bis 30 Kohlenstoffatomen
mit Hydroxyl-bzw. Säurezahlen von 0 bis 6
und/oder
2) Fettsäurefettalkoholester mit insgesamt 36 bis 44 Kohlenstoffatomen,
   B) 1) Mischestern aus
a) aliphatischen, cycloaliphatischen und/oder aromatischen Dicarbonsäuren mit 2 bis 22 Kohlenstoffatomen,
b) aliphatischen Polyolen mit 2 bis 6 Hydroxylgruppen und
c) aliphatischen Monocarbonsäuren mit 12 bis 30 Kohlenstoffatomen,
die im Mittel pro Molekül Mischester wenigstens eine freie Hydroxylgruppe enthalten, und/oder
2) Ester aus
a) aliphatischen, cycloaliphatischen und/oder aromatischen Polycarbonsäuren oder Hydroxypolycarbonsäuren und
b) aliphatischen Monoalkoholen mit 12 bis 24 Kohlenstoffatomen,
die im Mittel pro Molekül Ester mindestens eine freie Carboxylgruppe und/oder eine freie Hydroxylgruppe enthalten, und gegebenenfalls
   C) Metallseifen mit Gleitmittel-und/oder Stabili satorwirkung für PVC

2. Gleitmittelgemisch nach Anspruch 1, dadurch gekennzeichnet, daß in den Mischestern A 1) das Molverhältnis von Dicarbonsäure : Polyol : Monocarbonsäure etwa
n - 1 : n : nm - 2 (n - 1)
beträgt, wobei n eine ganze Zahl von 2 bis 11 ist und m die Anzahl der Hydroxylgruppen des Polyols bedeutet.

3. Gleitmittelgemisch nach den Ansprüchen 1 und 2, dadurch gekennzeichnet, daß in den Komponenten A 1) und B 1) die Dicarbonsäurekomponente gemäß a) eine aliphatische Dicarbonsäure mit 4 bis 10 Kohlenstoffatomen ist, die Polyolkomponente gemäß b) 3 bis 5 Kohlenstoffatome und 3 bis 4 Hydroxylgruppen und die Monocarbonsäurekomponente gemäß c) 14 bis 20 Kohlenstoffatome aufweisen.

4. Gleitmittelgemisch nach den Ansprüchen 1 und 3, dadurch gekennzeichnet, daß die Komponente A 1) aus einem Mischester aus Adipinsäure, Pentaerythrit und aliphatischen Monocarbonsäuren mit 20 bis 24 Kohlenstoffatomen besteht.

5. Gleitmittelgemisch nach den Ansprüchen 1 bis 4, dadurch gekennzeichnet, daß die Komponente B 1) aus Partialmischestern besteht, die im Mittel pro Molekül 1 bis 3 freie Hydroxyl-und/oder Carboxylgruppen enthalten.

6. Gleitmittelgemisch nach den Ansprüchen 1 bis 5, dadurch gekennzeichnet, daß die Komponente B 1) aus Partialmischestern besteht, die sich von Polyolen mit 3 oder 4 Hydroxylgruppen, insbesondere von Glycerin und Pentaerythrit, ableiten.

7. Gleitmittelgemisch nach den Ansprüchen 1 bis 6, dadurch gekennzeichnet, daß die Komponente C) aus Salzen organischer Säuren mit Metallen der zweiten Gruppe des Periodensystems, insbesondere aus Calcium-und Zinksalzen besteht, deren Säurerest sich bevorzugt von acylierten Hydroxycarbonsäuren ableitet.

8. Gleitmittelgemisch nach den Ansprüchen 1 bis 7, dadurch gekennzeichnet, daß die Komponente C) aus Salzen von acylierten Oligomeren niederer Hydroxylcarbonsäuren, insbesondere aus acylierten Milchsäureestoliden, besteht.

9. Gleitmittelgemisch nach den Ansprüchen 1 bis 8, dadurch gekennzeichnet, daß auf 1 Gewichtsteil der Komponente A 1) und/oder A 2) 0,2 bis 4 Gewichtsteile der Komponenten B 1) und/oder B 2) und gegebenenfalls 0,2 bis 2 Gewichtsteile der Komponente C) vorhanden sind.

10. Gleitmittelgemisch nach den Ansprüchen 1 bis 9, dadurch gekennzeichnet, daß auf 1 Gewichtsteil der Komponente A 1) und/oder A 2) 0,4 bis 0,6 Gewichtsteile der Komponenten B 1) und/oder B 2) und gegebenenfalls 0,4 bis 0,6 Gewichtsteile der Komponente C) vorhanden sind.

11. Gleitmittelgemisch nach den Ansprüchen 1 bis 10, dadurch gekennzeichnet, daß -sofern die Komponenten A 1) und A 2) nebeneinander vorhanden sind - das Gewichtsverhältnis von A 1) zu A 2) im Bereich von 1 : 0,1 bis 1 : 1 liegt.

12. Gleitmittelgemisch nach den Ansprüchen 1 bis 11, dadurch gekennzeichnet, daß -sofern die Komponenten B 1) und B 2) nebeneinander vorhanden sind - das Gewichtsverhältnis von B 1) zu B 2) im Bereich.von 9 : 1 bis 1 : 9 liegt.

13. Verwendung des Gleitmittelgemisches nach den Ansprüchen 1 bis 12 bei der Herstellung von Folien aus Emulsions-PVC mit K-Werten von 70 bis 80, insbesondere bei der Herstellung von weichmacherfreien Folien.

14. Verwendung nach Anspruch 13, dadurch gekennzeichnet, daß das Gleitmittelgemisch in Mengen von 4 bis 6 Gewichtsteilen auf 100 Teile Hart-PVC eingesetzt wird.

D 6653 EP

Fig. 1: Spaltlast in Abhängigkeit von der Umlaufgeschwindigkeit

Fig. 1: Spaltlast in Abhängigkeit von der Umlaufgeschwindigkeit